(19) Europäisches Patentamt
European Patent Office
Office européen des brevets

(11) **EP 2 052 888 B1**

(12) **EUROPÄISCHE PATENTSCHRIFT**

(45) Veröffentlichungstag und Bekanntmachung des Hinweises auf die Patenterteilung:
**26.09.2018   Patentblatt 2018/39**

(21) Anmeldenummer: **08018571.3**

(22) Anmeldetag: **23.10.2008**

(51) Int Cl.:
*B60G 17/0165* (2006.01)       *B60G 17/018* (2006.01)
*B60G 17/06* (2006.01)         *B60W 40/10* (2012.01)
*B60W 40/06* (2012.01)         *B60W 10/22* (2006.01)

(54) **Verfahren und System zur Beeinflussung der Bewegung eines in seinen Bewegungsabläufen steuerbaren oder regelbaren Fahrzeugaufbaus eines Kraftfahrzeuges und Fahrzeug**

Method and system for affecting the movement of a vehicle structure on a powered vehicle and vehicle controlled or regulated by its movement processes

Procédé et système destinés à influencer le mouvement d'une caisse d'un véhicule automobile ou d'un véhicule, pouvant être commandée ou réglée dans ses déroulements de mouvements

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **26.10.2007   DE 102007051204**

(43) Veröffentlichungstag der Anmeldung:
**29.04.2009   Patentblatt 2009/18**

(73) Patentinhaber: **Volkswagen Aktiengesellschaft 38440 Wolfsburg (DE)**

(72) Erfinder: **Arenz, Andrea**
**38458 Velpke (DE)**

(56) Entgegenhaltungen:
**EP-A1- 1 785 290      WO-A1-92/21525**
**DE-A1- 3 918 735      DE-A1- 4 201 146**
**DE-A1- 19 748 271     DE-C2- 19 600 724**
**US-A- 6 019 495**

## Beschreibung

Die Erfindung betrifft ein Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale einem Dämpferregler zugeführt werden, der Dämpferregler wenigstens ein Steuersignal zur Ansteuerung von Aktuatoren, insbesondere von semiaktiven oder aktiven Dämpfern, liefert, mittels denen die Bewegung des Fahrzeugaufbaus beeinflusst werden kann. Die Erfindung betrifft ferner ein System zur Durchführung des Verfahrens und ein Fahrzeug, insbesondere Kraftfahrzeug, mit einem System zur Beeinflussung der Bewegung eines in seinen Bewegungsabläufen steuerbaren oder regelbaren Fahrzeugaufbaus.

Verfahren und Systeme der gattungsgemäßen Art sind bekannt. So ist beispielsweise aus DE 39 18 735 A1 ein Verfahren und eine Vorrichtung zur Dämpfung von Bewegungsabläufen an Fahrwerken von Personen- und Nutzkraftfahrzeugen bekannt, bei denen aus einer sensorisch ermittelten Bewegung zweier Fahrzeugmassen mittels einer Signalverarbeitungsschaltung ein Steuersignal für einen steuerbaren, an den Fahrzeugmassen angreifenden Aktuator gebildet wird. Für eine komfortable und dennoch sichere Fahrwerkabstimmung ist vorgesehen, die sensorisch ermittelten Signale über eine der Signalverarbeitungsschaltung angehörenden Schaltungsanordnung mit frequenzabhängigem Übertragungsverhalten zu leiten. Hierdurch soll erreicht werden, dass aufgrund der frequenzabhängigen Verarbeitung der Sensorsignale keine statische Kennlinie für die Aktuatorsteuerung beziehungsweise Aktuatorregelung eingesetzt wird, sondern eine von dem Frequenzinhalt des Bewegungsablaufs abhängige Aktuatorsteuerung beziehungsweise Aktuatorregelung erfolgt. Hierdurch soll das Ziel eines möglichst hohen Fahrkomforts bei einer auch in Grenzbereichen des Fahrzustandes sicheren Auslegung des Fahrwerks erzielt werden. Diesem Ansatz liegt der Gedanke zugrunde, dass dem Zielkonflikt zwischen gewünschtem Fahrkomfort, das heißt komfortable und weiche Auslegung, und Fahrdynamik, das heißt sportliche und straffe Abstimmung, einerseits und einer ausreichenden Fahrsicherheit andererseits entsprochen werden soll. Für Fahrkomfort und Fahrdynamik ist eine Dämpfung der Bewegung des Aufbaus entscheidend, während für eine Fahrsicherheit eine Radlast beziehungsweise Radlastschwankung entscheidend ist.

Bekannt sind im Wesentlichen drei Dämpfersysteme für Fahrzeuge, wobei einer Federanordnung zwischen Rad und Aufbau ein Aktuator parallel geschaltet ist. Bekannt sind passive, semi-aktive und aktive Dämpfersysteme. Bei passiven Dämpfersystemen ist eine Veränderung der Dämpferkraft während des Fahrbetriebes nicht vorgesehen. Bei semi-aktiven Dämpfersystemen kann die Dämpferkraft durch eine Veränderung eines Ölfluidstromes unter Verwendung eines oder mehrerer Ventile verändert werden. Auf diese Art und Weise können die Dämpfungseigenschaften verändert werden. Semi-aktive Dämpfersysteme arbeiten rein energieabsorbierend. Bei aktiven Dämpfersystemen kann eine gewünschte Dämpferkraft sowohl dämpfend als auch energieeinbringend in jede Richtung bereitgestellt werden.

Derartige Regelungen basieren wesentlich auf vorhandenen Sensormessgrößen, wobei es häufig essentiell für die Reglergüte ist, wo die Sensoren angeordnet sind. In der Praxis existieren jedoch viele Einschränkungen, so dass Sensoren häufig nicht an den für die Regelung optimalen Punkten angebracht sind. Diese können durch mangelnden Bauraum, schädliche Umwelteinflüsse am Einbauort, Kosten oder dergleichen hervorgerufen werden.

Im Besonderen gilt dies für Fahrzeuge, bei denen die Einbausituation besonders eingeschränkt ist. Häufig sind Sensoren heutzutage auch in Clustern angeordnet oder es werden Sensorgrößen mehrfach verwendet. In diesen Fällen ist es sehr schwierig eine einzige optimale Stelle für alle Systeme zu finden.

Oft ist die Reglergüte auch deutlich höher, wenn mehr Messgrößen zur Verfügung stehen. Demgegenüber stehen aber vor allem die damit verbundenen erhöhten Kosten. Gerade im heutigen Wettbewerb werden nur die absolut notwendigen Sensorelemente verbaut.

Die Lage und die Bewegung eines allgemeinen Körpers im Raum wird allgemein über drei Achsen eines räumlichen kartesischen Koordinatensystems beschrieben: Längsachse (Rollachse, Kürzel x), Querachse (Nickachse, Kürzel y) und Hochachse (Gierachse, Kürzel z).

Als Längsachse wird generell jene Achse eines Körpers bezeichnet, die der Richtung seiner größten Ausdehnung entspricht. Bei einem Fahrzeug kennzeichnet diese Achse auch die Fahrtrichtung. Unter Wankachse versteht man die Verbindungslinie durch die Wankzentren von Vorder- und Hinterachse. Bei Kurvenfahrt neigt sich ein Fahrzeug aufgrund der Fliehkraft nach außen. Der Punkt, um den der Aufbau kippt, wird als Wankzentrum bezeichnet. Der Abstand der Wankachse zum Schwerpunkt bestimmt die Seitenneigung des Aufbaus. Unter Schwerpunkt soll der Punkt verstanden werden, an dem die Masse eines Körpers die gleiche Wirkung auf andere Körper hätte wenn sie in diesem Punkt vereint wäre. Er wird in der Regel für den stationären Fall angegeben, das heißt für stillstehende Fahrzeuge auf einer ebenen neigungsfreien Fläche. Bei Geradeausfahrt fällt die Wankachse generell mit der Längsachse zusammen. Die Nickachse ist die Achse senkrecht auf Längs- und Gierachse und verläuft durch deren Schnittpunkt. Als Gierachse bezeichnet man die vertikale Achse durch den Schwerpunkt eines allgemeinen Fahrzeugs, um die der Fahrer sein Fahrzeug mit Hilfe von Steuermechanismen, zum Beispiel einer Lenkung dreht.

Die drei Grund-Rotationsbewegungen eines Körpers im Raum werden generell mit Wanken, Nicken und Gieren bezeichnet. Die dazugehörigen Winkel heißen Wank-, Nick- und Gierwinkel. Unter der Winkelgeschwindigkeit (Rotationsgeschwindigkeit) versteht man die zeitliche Änderung des Drehwinkels bei einer Kreisbewegung (Rotation). Vereinfacht gesagt gibt sie an, wie schnell sich etwas dreht.

Die Drehbewegung heißt auch Gieren. Die Gierrate beziehungsweise Giergeschwindigkeit bezeichnet bei einem Fahrzeug die Winkelgeschwindigkeit der Drehung um die Hochachse. Nicken bezeichnet die Bewegung eines Fahrzeugs um seine Quer-/Nickachse, wobei sich die Neigung der Längsachse verändert. Wanken (oder Rollen) bezeichnet die Bewegung um seine Längsachse. Die Zusammenfassung von Hub, Nicken und Wanken in einem Punkt werden generell auch als Modalbewegung in diesem Punkt bezeichnet. Im Allgemeinen wird sie auf den unveränderlichen (statischen) Fahrzeugschwerpunkt bezogen. Betrachtet man nun beispielsweise einen Stoßdämpfer, so liegt seine Wirkrichtung im Wesentlichen entlang der z-Achse. Er dient somit im Wesentlichen dazu, sogenannte Hubbewegungen des Aufbaus in z-Richtung zu bedämpfen. Jeder einzelne Dämpfer wirkt nur in Hubrichtung an seiner Position. Bedingt durch die Anordnung von meist je einem Stoßdämpfer an jeder Fahrzeugecke kann nun eine Gesamtbewegung des Aufbaus im Schwerpunkt beeinflusst werden, die sich aus Hub-, Nick- und Wankanteilen zusammensetzt. Zusammenfassend kann festgehalten werden, dass Bewegungen des Aufbaus in z-Richtung somit entweder durch die einzelnen Hubbewegungen an jeder Fahrzeugecke beschrieben werden können oder durch eine kombinierte Hub-, Wank- und Nickbewegung, zum Beispiel im Schwerpunkt des Aufbaus. Entsprechend kann eine Regelung des Aufbaus, zum Beispiel unter Verwendung von elektronischen Stoßdämpfern, entweder über die Hubbewegung an den Fahrzeugecken erfolgen oder über die Modalbewegung im Aufbau-Schwerpunkt. Der erstgenannte Ansatz ist eventuell physikalisch genauer, berücksichtigt jedoch die Komfortansprüche der Insassen deutlich weniger. Der Fahrer sitzt meist nahe dem Fahrzeugschwerpunkt; seine Bewegungsempfindungen werden daher stark geprägt durch die Hub-, Wank- und Nickbewegungen in diesem Punkt. Daher wird beim Stand der Technik fast ausschließlich auf den letztgenannten Ansatz zurückgegriffen.

Stand der Technik bei Systemen mit geregelten Dämpfern ist die Verwendung von Aufbaubeschleunigungssensoren und Relativwegsensoren. Alternativ dazu werden in anderen Systemen Aufbau- und Radbeschleunigungssensoren verwendet. In wieder anderen Ausprägungen wird nur mit Relativwegsensoren gearbeitet. Ferner ist bekannt, Sensorcluster zu verwenden, die einen Vertikal-Beschleunigungssensor und zwei Drehwinkelsensoren für Wanken und Nicken umfassen.

Alle bekannten Anwendungen basieren auf drei Aufbaubeschleunigungssensoren, falls diese nicht komplett entfallen, da diese Größen entweder anders berechnet werden oder gar nicht berücksichtigt werden. Unter der Annahme, dass es sich beim Fahrzeugaufbau um einen starren Körper handelt, werden mindestens drei Beschleunigungen benötigt um die Bewegung des Körpers im Raum eindeutig zu beschreiben. Die Anordnung der Sensoren erfolgt meist in der Nähe der Dämpferangriffspunkte. Eine derartige Anordnung ist beispielsweise aus DE 196 00 724 C2 bekannt.

Generell wird beim Stand der Technik mit Modalbewegungen gearbeitet. Dabei werden über eine Transformation die Beschleunigungen an den Sensorpunkten umgerechnet auf Modalbewegungen im statischen Fahrzeugschwerpunkt. Im Prinzip ist es bei dieser Betrachtung nicht so relevant, ob die Sensoren in der Nähe der Dämpferangriffspunkte positioniert werden oder weiter entfernt. Häufig wird jedoch bei einer Kombination mit Radbeschleunigern die Dämpfergeschwindigkeit als Differenz zwischen Aufbaugeschwindigkeit und Radgeschwindigkeit gebildet. In diesem Fall sollten sowohl Rad- als auch Aufbaubeschleunigungssensoren so dicht wie möglich am Dämpfer angebracht sein. Dies ist jedoch nicht immer möglich. Abweichungen von der Position gehen in diesen Fällen als Ungenauigkeit beziehungsweise Störung in die Regelung ein.

Zu Messzwecken werden die Fahrzeuge häufig mit weiteren Sensoren bestückt, zum Beispiel an dem Fahrersitz. Diese Position gibt Auskunft darüber, welche Bewegungen der Fahrer direkt über die Sitzfläche spürt und stellt ein wichtiges Beurteilungsmaß dar.

Für den Serieneinsatz werden jedoch keinerlei Sensoren an dieser Position verwendet, da dies die Systeme verteuern würde.

Sinnvoll wäre es Vertikaldynamik-Regler auch für diese Position auszulegen, da dabei direkt berücksichtigt würde, was der Fahrer spürt. Da keine Sensorgrößen in der Serie verbaut werden, wurden solche Konzepte bisher nicht entwickelt.

Andere Regelungen basieren auf Beobachterstrukturen, die jedoch meist den Nachteil haben, dass sie sehr aufwendig und rechenintensiv sind. Ferner gelten die Ergebnisse nur unter bestimmten Annahmen und nur für bestimmte Einsatzbereiche. Daher werden Beobachter in der Regel nur ergänzend zu bestehenden Sensorgrößen verwendet.

EP 1 785 290 B1 offenbart ein Verfahren zum Erhalten einer vierten Vertikalbeschleunigung aus Vertikalbeschleunigung, die mittels dreier Vertikalbeschleunigungssensoren an semiaktiven Aufhängungssystemen eines Fahrzeugs gemessen wurden. Die vierte Vertikalbeschleunigung wird am Ort eines vierten Dämpfers des semiaktiven Aufhängungssystems aus den drei anderen Vertikalbeschleunigungen an drei bekannten Anbauten von Dämpfern des semiaktiven Aufhängungssystems berechnet.

Der Erfindung liegt daher die Aufgabe zugrunde, ein Verfahren und ein System der gattungsgemäßen Art anzugeben, mittels denen in einfacher und sicherer Weise eine Regelung der Bewegung eines Fahrzeugaufbaus mit elektronisch ansteuerbaren Aktuatoren (Dämpfern) möglich ist.

Erfindungsgemäß wird diese Aufgabe durch ein Verfahren mit den im Anspruch 1 genannten Merkmalen gelöst.

Dadurch, dass die Bewegung des Fahrzeugaufbaus an wenigstens drei Punkten des Fahrzeugaufbaus gemessen wird und aus den gemessenen wenigstens drei Messsignale die Bewegung des Fahrzeugaufbaus an wenigstens einem weiteren Punkt berechnet wird, dessen x- und y-Lagekoordinaten bekannt sind und dar vertikale Punkt die Position des Fahrersitzes ist, ist vorteilhaft möglich, Fahrzeugaufbaubewegungen, insbesondere Fahrzeugaufbaubeschleunigungen, -geschwindigkeiten -ruck und/oder -weg an die Position des Fahrersitzes auf der Basis von vorhandenen Sensorgrößen des Fahrzeugsaufbaus zu ermitteln.

Basis der Überlegung bildet eine Ebenengleichung. Die Ebene ist ein Grundbegriff der Geometrie. Allgemein handelt es sich um ein unendlich ausgedehntes flaches zweidimensionales Objekt. Hierbei bedeutet unendlich ausgedehnt und flach, dass zu je zwei Punkten auch eine durch diese verlaufende Gerade komplett in der Ebene liegt. Zweidimensional bedeutet, dass - abgesehen von enthaltenen Geraden - kein echter Teilraum ebenfalls diese Eigenschaft hat. In einem dreidimensionalen euklidischen Raum ist eine Ebene dabei festgelegt durch drei nicht kollineare Punkte, durch eine Gerade und einen nicht auf ihr liegenden Punkt, durch zwei sich schneidende Geraden oder durch zwei parallele Geraden. Bekannt ist vor allem die Normalvektorform, welche sich des Normalvektors $\vec{n}$ der Ebene bedient. Weiterhin wird eine Zahl $\lambda$ angegeben, um die Position der Ebene zu bestimmen, da der Normalvektor nur die Schräglage der Ebene festlegt; er definiert eine Schar von parallelen Ebenen. Die Vektoren $\vec{q}$ vom Ursprung zu einem Punkt auf der Ebene erfüllen dann die Gleichung

$$\vec{n} \cdot \vec{q} = \lambda$$

Ein Beispiel für eine Ebenengleichung in Normalvektorform lautet:

$$\vec{n} = \begin{pmatrix} 1 \\ -2 \\ 3 \end{pmatrix}, \ \vec{q} = \begin{pmatrix} x \\ y \\ z \end{pmatrix}, \ \lambda = 5 \ : \quad x - 2y + 3z = 5$$

Eine andere gängige Variante ist die Parameterdarstellung, bei welcher ein Punkt P auf der Ebene gegeben ist und zwei auf der Ebene verlaufende linear unabhängige Vektoren $\vec{v}_1$, $\vec{v}_2$. Das Kreuzprodukt dieser beiden Vektoren ergibt den Normalvektor:

$$\vec{v}_1 \times \vec{v}_2 = \vec{n}$$

Die Ebene wird definiert durch die Gleichung

$$\vec{q} = P + s \cdot \vec{v}_1 + t \cdot \vec{v}_2$$

Jedes Wertepaar liefert einen Vektor $\vec{q}$ zu einem Punkt auf der Ebene. Dieser Vektor erfüllt die oben angeführte Normalvektor-Gleichung.

Ein Beispiel für eine Ebenengleichung in Parameterdarstellung lautet:

$$P = (5/0/0), \ \vec{v}_1 = \begin{pmatrix} 5 \\ 1 \\ -1 \end{pmatrix}, \ \vec{v}_2 = \begin{pmatrix} 2 \\ 1 \\ 0 \end{pmatrix}$$

$$\vec{q} = \begin{pmatrix} 5 \\ 0 \\ 0 \end{pmatrix} + s \cdot \begin{pmatrix} 5 \\ 1 \\ -1 \end{pmatrix} + t \cdot \begin{pmatrix} 2 \\ 1 \\ 0 \end{pmatrix}$$

Nun kann man eine Ebene durch den Fahrzeugaufbau legen, die durch die drei beziehungsweise vier Aktorangriffspunkte verläuft. Da die Dämpfer an Vorder- und Hinterachse symmetrisch zueinander angeordnet sind, wird der vierte Punkt (Position des Fahrersitzes) automatisch mit erfasst.

Die Besonderheit ist nun, dass man die geometrische z-Koordinate durch die an dieser Stelle liegende Bewegung, zum Beispiel Beschleunigung entlang der z-Achse, ersetzt. Es ergibt sich somit ein kombiniert geometrisch-dynamisches Gleichungssystem. Oder anders ausgedrückt: man bildet ein Gleichungssystem in x und y aus geometrischen Koordinaten und ergänzt dies um beziehungsweise kombiniert es mit Bewegungen in z-Richtung.

Besonders vorteilhaft ist, dass die Sensor-Koordinaten in z-Richtung geometrisch durchaus unterschiedlich sein können, da die z-Koordinate durch die z-Bewegung ersetzt wird und daher irrelevant ist. Wichtig ist, dass die Sensoren alle auf einem Körper angeordnet sind, der durch die Ebene repräsentiert wird.

Im vorliegenden Fall wird die z-Koordinate ersetzt. Vorstellbar für andere Anwendungen ist jedoch auch, die x- oder die y-Koordinate stattdessen zu ersetzen.

Die Erfindung besteht somit darin die Bewegungen einer oder mehrerer Größen aus vorhandenen Bewegungsgrößen zu ermitteln, wobei alle Bewegungen am selben Körper auftreten. Diesbezüglich wird ausgenutzt, dass die vorhandenen Bewegungsgrößen die gleiche Messrichtung aufweisen und die geometrischen Positionen aller Größen bekannt sind und so eine geometrisch-dynamische Ebene aufgespannt werden kann.

In bevorzugter Ausgestaltung der Erfindung ist vorgesehen, dass aus drei Aufbaubeschleunigungssensoren mit vertikaler Messrichtung (entlang der z-Achse) mit deren bekannten Sensorpositionen die Beschleunigungen an die Position des Fahrersitzes des Fahrzeugaufbaus berechnet werden kann.

Ferner ist in bevorzugter Ausgestaltung der Erfindung möglich, dass auch "virtuelle" Bewegungen erzeugt werden können, wie die Bewegung am Fahrersitz. Auf diese Weise können virtuelle Sensorgrößen ermittelt werden, die dann beispielsweise in nachfolgenden Regelungen Eingang finden. Die Größen können aber auch rein zu messtechnischen Analysezwecken verwendet werden. Diesbezüglich ist es beispielsweise möglich, die Beschleunigung am Fahrersitz zu berechnen und entsprechend darauf zu regeln.

In weiterer bevorzugter Ausgestaltung der Erfindung ist vorgesehen, Sensorgrößen oder aus diesen abgeleitete Größen als Bewegungsgrößen für die Ebenengleichung zu verwenden. Meistens ist es vorteilhaft, direkt aus existierenden Sensorgrößen die fehlenden Größen zu ermitteln und erst danach integrierte beziehungsweise differenzierte Signalgrößen zu bilden, da so alle Signale mit denselben Filtern, Integratoren und/oder Differenzierern beaufschlagt werden und daher gleiche Amplituden- und Phasenbeeinflussung aufweisen.

Darüber hinaus ist in bevorzugter Ausgestaltung der Erfindung vorgesehen, dass die Bewegung am Aktorort online, insbesondere durch ein Fahrzeugsteuergerät, berechnet werden kann. Setzt man die Sensorposition und die Aktorposition in x und y als feste bekannte Größen voraus und dass die Sensorbewegung in z bekannt ist, ist dies vorteilhaft möglich.

Die vorgeschlagene Berechnungsvorschrift bildet die Realität exakt ab und ermöglicht eine verlustfreie Umrechnung auf verschiedene Positionen. Dabei können sowohl drei Beschleunigungen vorgegeben werden und daraus dann weitere Beschleunigungen berechnet werden. Analoges gilt auch für andere Bewegungen des Fahrzeugaufbaus wie Weg, Geschwindigkeit oder Ruck oder dergleichen.

Es ist vorgesehen, dass die Messrichtung nicht festgelegt sondern wählbar ist, beispielsweise entlang der x-Richtung und/oder der y-Richtung.

Weiter ist in bevorzugter Ausgestaltung der Erfindung vorgesehen, auch mehr als drei Bewegungsgrößen zu verwenden und mit diesen zusätzlichen Größen weitere Freiheitsgrade, beispielsweise eine Torsion zu definieren.

Ferner ist in bevorzugter Ausgestaltung der Erfindung vorgesehen, die Ebenengleichung über ein "least squares"-Verfahren zu vermitteln.

Die Methode der kleinsten Quadrate (bezeichnender auch: der kleinsten Fehlerquadrate; englisch: Least Squares Method) ist das mathematische Standardverfahren zur Ausgleichungsrechnung. Es ist eine Wolke aus Datenpunkten gegeben, die physikalische Messwerte, wirtschaftliche Größen oder Ähnliches repräsentieren können. In diese Punktwolke soll eine möglichst genau passende, parameterabhängige Modellkurve gelegt werden. Dazu bestimmt man die Parameter dieser Kurve numerisch, indem die Summe der quadratischen Abweichungen der Kurve von den beobachteten Punkten minimiert wird.

In weiterer bevorzugter Ausgestaltung der Erfindung kann diese Berechnung für die Berechnung von beliebigen virtuellen Relativbewegungen zwischen zwei Körpern erweitert werden. Es werden analog zwei Ebenen definiert, die sich zueinander bewegen. An festgelegten Punkten stellt die Relativbewegung dann die Bewegung der einen Ebene minus der Bewegung der anderen Ebene dar.

Die Relativbewegung zwischen Rad und Aufbau eines Fahrzeugs ist nicht auf diese einfache Weise ermittelbar, da die Räder alle eigenständige Körper darstellen, die nicht notwendigerweise durch eine Ebene verlaufen müssen.

In weiterer bevorzugter Ausgestaltung der Erfindung ist es jedoch möglich, die Relativbewegung zu schätzen. Dies kann zum Beispiel wie folgt vorgenommen werden: Die Relativbewegung setzt sich aus der Aufbaubewegung minus der Radbewegung zusammen. Die Aufbaubewegung ist mit Hilfe des oben genannten Verfahrens zu berechnen. Bei der Radbewegung gibt es nun mehrere Varianten zur näherungsweisen Ermittlung.

Darüber hinaus ist in weiterer bevorzugter Ausgestaltung der Erfindung vorgesehen, dass bei der Berechnung von "virtuellen" Relativbewegungen, der Aufbauanteil über die Ebenen-Transformation ermittelt wird und der Radanteil entweder mit einem zeitlichen Verzug von dem vorausfahrenden Rad übernommen wird oder über eine Radebenengleichung ermittelt wird oder von der anderen Achsseite übernommen wird. Hierbei wird davon ausgegangen, dass ein hinteres Rad in der Spur des vorderen läuft und in sehr guter Näherung dieselbe Dynamik nur zeitversetzt erfährt, wobei der Zeitversatz durch den Abstand zwischen den Rädern und die Fahrgeschwindigkeit bestimmt wird. Nachteilig an diesem Ansatz ist es, dass Signalgrößen über relativ lange Zeiträume zu speichern sind, das heißt das Verfahren ist sehr speicherintensiv, und es gilt nur wenn die vorderen Größen vorhanden sind und nur für Vorwärtsfahrt.

Bei einem anderen Ansatz geht man davon aus, dass näherungsweise auch eine Ebene durch die Räder gelegt werden kann und wendet das oben genannte Verfahren an. Eine dritte Möglichkeit besteht darin, die Radbewegungen der anderen Achsseite zu verwenden. Dies ist jedoch meist am ungenauesten, da sich die linke und die rechte Straßenseite bezüglich der Radanregung stark unterscheiden.

Die Aufgabe wird ferner durch ein System zur Beeinflussung der Bewegung eines in seinen Bewegungsabläufen steuerbaren oder regelbaren Fahrzeugaufbaus eines Kraftfahrzeuges mit den in Anspruch 15 genannten Merkmalen gelöst. Dadurch, dass der Dämpferregler beziehungsweise ein Steuergerät ein Modul umfasst, mittels dem aus bekannten Sensorsignalen an wenigsten drei Punkten des Fahrzeugaufbaus die Bewegung des Fahrzeugaufbaus an wenigstens einen weiteren wählbaren Punkt des Fahrzeugaufbaus berechenbar ist, ist vorteilhaft möglich, den Dämpferregler modular aufzubauen und im Fahrzeug bestehende Systeme, beispielsweise in ein Steuergerät, in einfacher Art und Weise zu integrieren. Auf die Anordnung zusätzlicher Sensoren zur Messung der Bewegung des Fahrzeugaufbaus in den wählbaren Punkten kann verzichtet werden.

Weitere bevorzugte Ausgestaltungen ergeben sich aus den übrigen, in den Unteransprüchen genannten Merkmalen.

Die Erfindung wird nachfolgend in Ausführungsbeispielen anhand der zugehörigen Zeichnungen erläutert. Es zeigen:

Figur 1    schematisch ein Kraftfahrzeug mit einer Dämpferregelung;

Figur 2    eine Prinzipskizze eines Kraftfahrzeuges mit vertikalen Eck-Aufbaugeschwindigkeiten;

Figur 3    eine Prinzipskizze eines Kraftfahrzeuges mit vertikalen Modal-Aufbaugeschwindigkeiten;

Figur 4    eine Prinzipskizze eines Kraftfahrzeuges mit im Dämpfersystem angeordneten Sensoren und den resultierenden Rad-, Aufbau- und Dämpfergeschwindigkeiten;

Figur 5    eine Aufbauebene mit Sensorpositionen S1 bis S3, Aktorangriffspunkten A1 bis A4, und virtuellen Sensorpositionen A5 und

Figur 6    eine Aufbauebene mit Sensorbewegungen an den Punkten S1 bis S3 und einer daraus berechneten Aufbaubewegung an Punkt A5.

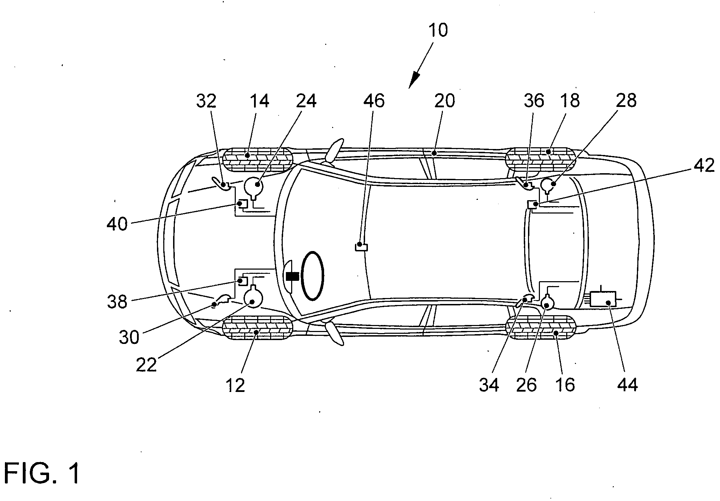

Figur 1 zeigt schematisch in Draufsicht ein insgesamt mit 10 bezeichnetes Kraftfahrzeug. Aufbau und Funktion von Kraftfahrzeugen sind allgemein bekannt, so dass im Rahmen der vorliegenden Beschreibung hierauf nicht näher eingegangen wird.

Das Kraftfahrzeug 10 besitzt vier Räder 12, 14, 16 und 18. Die Räder 12, 14, 16 und 18 sind über eine bekannte Radaufhängung an einem Aufbau 20 des Kraftfahrzeuges 10 befestigt. Unter Aufbau 20 wird im Rahmen der Erfindung allgemein die Fahrzeugkarosserie mit der Fahrgastzelle verstanden. Zwischen den Rädern 12, 14, 16 und 18 einerseits und dem Aufbau 20 ist jeweils ein Dämpfer 22, 24, 26 beziehungsweise 28 angeordnet. Die Dämpfer 22, 24, 26 und 28 sind parallel zu nicht dargestellten Federn angeordnet. Die Dämpfer 22, 24, 26 und 28 sind beispielsweise als semi-aktive Dämpfer ausgebildet, das heißt durch Anlegen eines Steuersignals an ein Stellmittel der Dämpfer kann die Dämpferkraft variiert werden. Das Stellmittel ist üblicherweise als elektromagnetisches Ventil ausgebildet, so dass das Stellsignal ein Steuerstrom für das Ventil ist.

Jedem Rad beziehungsweise jedem Dämpfer ist ein Wegsensor 30, 32, 34 beziehungsweise 36 zugeordnet. Die Wegsensoren sind als Relativwegsensoren ausgebildet, das heißt diese messen eine Veränderung des Abstandes des Aufbaus 20 von dem jeweiligen Rad 12, 14, 16 beziehungsweise 18. Typischerweise werden hier sogenannte Drehwinkel-Wegsensoren eingesetzt, deren Aufbau und Funktion allgemein bekannt sind.

Der Aufbau 20 umfasst ferner drei an definierten Punkten angeordnete Vertikalbeschleunigungssensoren 38, 40 und 42. Diese Beschleunigungssensoren 38, 40 und 42 sind fest an dem Aufbau 20 angeordnet und messen die Vertikalbeschleunigung des Aufbaus im Bereich der Räder 12, 14 beziehungsweise 18. Im Bereich des linken hinteren Rades 16 kann die Beschleunigung aus den drei anderen Beschleunigungssensoren rechnerisch ermittelt werden, so dass hier auf die Anordnung eines eigenen Beschleunigungssensors verzichtet werden kann.

Die Anordnung der Sensoren ist hier lediglich beispielhaft. Es können auch andere Sensoranordnungen, beispielsweise ein vertikaler Aufbaubeschleunigungssensor und zwei Drehwinkelsensoren oder dergleichen, zum Einsatz kommen.

Das Kraftfahrzeug 10 umfasst ferner ein Steuergerät 44, das über Signal- beziehungsweise Steuerleitungen mit den Stellmitteln der Dämpfer 22, 24, 26 und 28, den Wegsensoren 30, 32, 34 und 36 und den Beschleunigungssensoren 38, 40 und 42 verbunden ist. Das Steuergerät 44 übernimmt die nachfolgend noch näher zu erläuternde Dämpferregelung. Daneben kann das Steuergerät 44 selbstverständlich auch weitere, hier nicht zu betrachtende Funktionen innerhalb des Kraftfahrzeuges 10 übernehmen. Das Kraftfahrzeug 10 umfasst ferner ein Schaltmittel 46, beispielsweise einen Taster, ein Drehrad oder dergleichen, mittels dem von einem Fahrzeugführer eine Anforderung an die Bewegung des Aufbaus 20 gewählt werden kann. Hier kann beispielsweise zwischen der Anforderung "Komfort", der Anforderung "Sport" und der Anforderung "Basis" gewählt werden. Die Wahl ist entweder stufenförmig zwischen den drei Modi oder stufenlos mit entsprechenden Zwischenmodi möglich.

Das Schaltmittel 46 ist ebenfalls mit dem Steuergerät 44 verbunden.

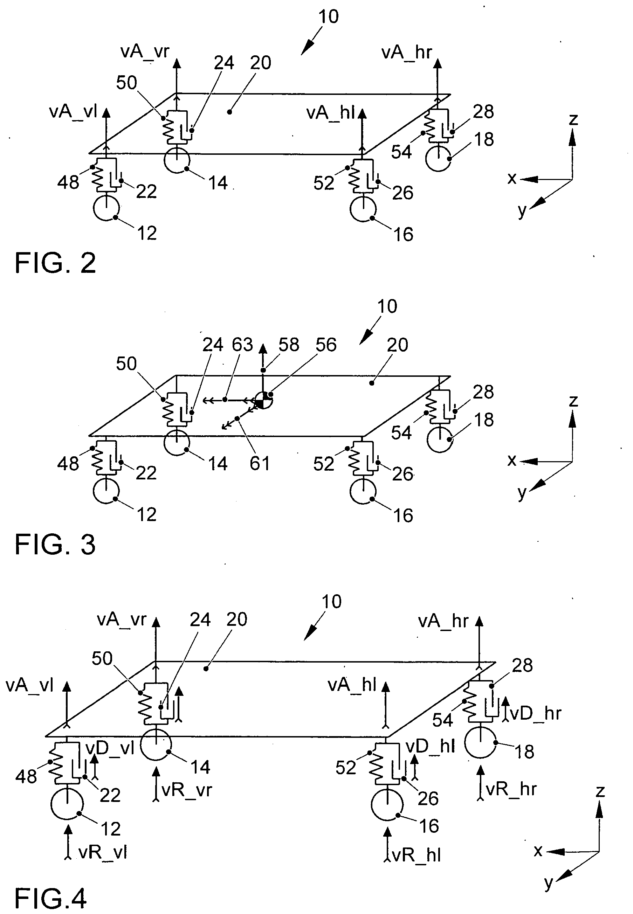

Figur 2 zeigt eine Prinzipskizze des Kraftfahrzeuges 10, wobei hier der Aufbau 20 als ebene Fläche angedeutet ist. An den Ecken des Aufbaus 20 sind jeweils die Räder 12, 14, 16 und 18 über eine Feder-Dämpfer-Kombination in an sich bekannter Art und Weise angeordnet. Die Feder-Dämpfer-Kombination besteht aus den Dämpfern 22, 24, 26 und 28 und jeweils parallel geschalteten Federn 48, 50, 52 und 54. An den Ecken des Aufbaus 20 sind die in Figur 1 dargestellten Beschleunigungssensoren 38, 40 beziehungsweise 42 angeordnet, mittels denen die vertikale Geschwindigkeit an den Ecken des Aufbaus 20 bestimmt werden kann. Hierbei handelt es sich um die Geschwindigkeiten vA_vl (Geschwindigkeit Aufbau vorne links), vA_vr (Geschwindigkeit Aufbau vorne rechts), vA_hl (Geschwindigkeit Aufbau hinten links) und vA_hr (Geschwindigkeit Aufbau hinten rechts). Die Geschwindigkeit kann aus den mittels der Beschleunigungssensoren gemessenen Beschleunigungen durch Integration errechnet werden.

Figur 3 zeigt wiederum die Prinzipskizze des Kraftfahrzeuges 10, wobei gleiche Teile wie in den vorhergehenden Figuren mit gleichen Bezugszeichen versehen und nicht nochmals erläutert sind. In einem Schwerpunkt 56 sind die Modalbewegungen des Aufbaus 20 verdeutlicht. Dies ist einerseits ein Hub 58 in vertikaler Richtung (z-Richtung), ein Nicken 61, das heißt eine Drehbewegung um eine in der y-Achse liegende Querachse, und ein Wanken 63, das heißt eine Drehbewegung um eine in der x-Achse liegende Längsachse des Kraftfahrzeuges 10.

Figur 4 zeigt eine weitere Prinzipskizze des Kraftfahrzeuges 10, wobei hier, in Ergänzung zu der Darstellung in Figur 2, weitere Signale dargestellt sind. Zusätzlich sind hier die Dämpfergeschwindigkeiten vD dargestellt, wobei vD_vl die Dämpfergeschwindigkeit für den Dämpfer 22 (vorne links), vD_vr die Dämpfergeschwindigkeit für den Dämpfer 24 (vorne rechts), vD_hl die Dämpfergeschwindigkeit für den Dämpfer 26 (hinten links) und vD_hr die Dämpfergeschwindigkeit für den Dämpfer 28 (hinten rechts) ist. Die Dämpfergeschwindigkeiten können über eine Differenzierung aus den Signalen der Wegsensoren 30, 32, 34 beziehungsweise 36 (Figur 1) ermittelt werden. In Figur 4 sind ferner die Radgeschwindigkeiten vR angedeutet. Hier steht Geschwindigkeit vR_vl für das Rad 12 (vorne links), vR_vr für das Rad 14 (vorne rechts), vR_hl für das Rad 16 (hinten links) und vR_hr für das Rad 18 (hinten rechts). Die Radgeschwindigkeiten vR können beispielsweise über Radbeschleunigungssensoren ermittelt werden.

Da sowohl die Aufbaugeschwindigkeiten vA, die Dämpfergeschwindigkeiten vD und die Radgeschwindigkeiten vR alle den gleichen Richtungsvektor besitzen (in z-Richtung), besteht der Zusammenhang vD=vA-vR. Hierdurch müssen nicht alle Messgrößen in Form von Messsignalen vorliegen, sondern können aus den anderen Messgrößen errechnet werden.

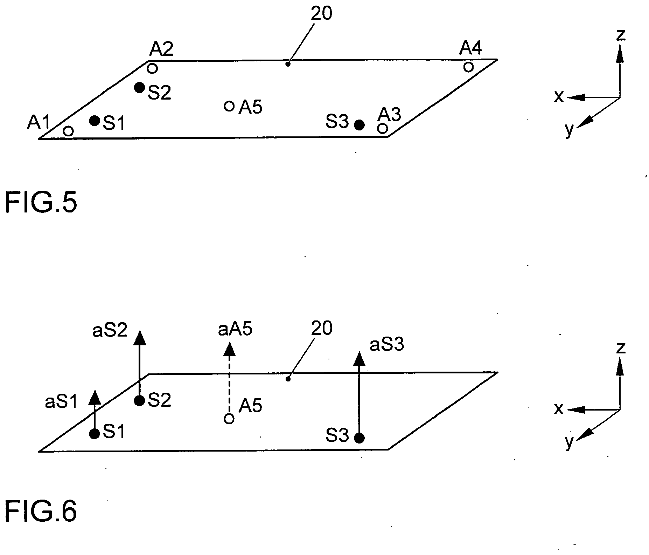

Figur 5 zeigt die Aufbauebene 20 mit den Sensorpositionen S1 bis S3. Ferner sind die Aktorangriffspunkten A1 bis A4 dargestellt, an denen Bewegungen zu berechnen sind. Ferner ist eine virtuellen Sensorpositionen A5 angegeben, die die Bewegung am Fahrersitz berechnet.

Figur 6 zeigt die an der Aufbauebene 20 auftretenden Sensorbewegungen wie beispielsweise die Aufbaubeschleunigungen aS1 bis aS3. Aus Kenntnis dieser Beschleunigungen sowie der Positionen S1 bis S3 und der Position A5 kann nun an A5 die Beschleunigung aA5 berechnet werden.

Das Verfahren kann im Detail wie folgt beschrieben werden:
Die Gleichung der Ebene sei gegeben über

$$P1 + e1 \times ( P2\text{-}P1 ) + e2 \times ( P3\text{-}P1 ) = P4$$

Entsprechend ergibt sich die Lösung für e1 und e2 über

$$[ ( P2\text{-}P1 ) \ ( P3\text{-}P1 ) ] \times [ e1 ; e2 ] = ( P4\text{-}P1 )$$

mit

$$e1 = \det [\,(\,P4\text{-}P1\,)\,(\,P3\text{-}P1\,)\,] \; / \; \det [\,(P2\text{-}P1\,)\,(\,P3\text{-}P1\,)\,]$$

$$e2 = \det [\,(\,P2\text{-}P1\,)\,(\,P4\text{-}P1\,)|\; / \; \det [\,(\,P2\text{-}P1\,)\,(\,P3\text{-}P1\,)\,]$$

Jede Aufbaubewegung aA4/5 (siehe Figur 6) mit der geometrischen Position A4/5 = P4 = [x_aA ; y_aA] (siehe Figuren 5 und 6) ergibt sich dann aus den Sensorbewegungen aS1/2/3 mit den geometrischen Positionen PS1/2/3 = P1/2/3 = [x_aS1/2/3 ; y_aS1/2/3] und jeweils daraus ermittelten e1 und e2 zu

$$aA = (\,1 - e1 - e2\,) \; x \; aS1 + e1 \; x \; aS2 + e2 \; x \; aS3$$

Sehr vorteilhaft bei diesem Verfahren ist, dass die Determinantenberechnungen für e1 und e2 offline erfolgen können, da die geometrischen Positionen fest und bekannt sind und nur die Bewegung in z variabel ist.

Die Erfindung betrifft also ein Verfahren oder Regelungssystemkomponente zur Transformation und/oder Neubestimmung von Signal- beziehungsweise Sensorgrößen, wobei die Bewegung eines Körpers, insbesondere die Bewegung des Aufbaus eines Fahrzeugs, an mindestens drei Punkten des Körpers gemessen wird, und dass eine Einrichtung vorgesehen ist, die aus den gemessenen Werten die Bewegung des Körpers am Fahrersitz bestimmt.

## Bezugszeichenliste

| | |
|---|---|
| 10 | Kraftfahrzeug |
| 12 | Rad |
| 14 | Rad |
| 16 | Rad |
| 18 | Rad |
| 20 | Aufbau |
| 22 | Dämpfer |
| 24 | Dämpfer |
| 26 | Dämpfer |
| 28 | Dämpfer |
| 30 | Wegsensor |
| 32 | Wegsensor |
| 34 | Wegsensor |
| 36 | Wegsensor |
| 38 | Beschleunigungssensoren |
| 40 | Beschleunigungssensoren |
| 42 | Beschleunigungssensoren |
| 44 | Steuergerät |
| 46 | Schaltmittel |
| 48 | Feder |
| 50 | Feder |
| 52 | Feder |
| 54 | Feder |
| 56 | Schwerpunkt |
| 58 | Hub |

## Patentansprüche

1. Verfahren zur Erzeugung von Signalen zur Beeinflussung der Bewegung eines in seinen Bewegungsabläufen steuerbaren oder regelbaren Fahrzeugaufbaus eines Kraftfahrzeuges, wobei sensorisch die Bewegung des Fahrzeugaufbaus ermittelt wird, die den ermittelten Sensorwerten entsprechenden Sensorsignale werden einem Dämpferregler zugeführt und der Dämpferregler wenigstens ein Steuersignal zur Ansteuerung von Aktuatoren, insbesondere semi-aktiven oder aktiven Dämpfern, liefert, mittels denen die Bewegung des Fahrzeugaufbaus beeinflusst werden kann, **dadurch gekennzeichnet, dass** die Bewegung des Fahrzeugaufbaus an wenigstens drei Punkten des Fahrzeugaufbaus gemessen wird und aus den gemessenen wenigstens drei Messsignalen die Bewegung des Fahrzeugaufbaus an wenigstens einen weiteren Punkt berechnet wird, dessen x- und y-Lagekoordinaten bekannt sind, und der weitere Punkt die Position eines Fahrersitzes ist.

2. Verfahren nach Anspruch 1, **dadurch gekennzeichnet, dass** drei Aufbaubeschleunigungen mit vertikalen Messgrößen (z-Achse) ermittelt werden und unter Kenntnis der Sensorpositionen (S1, S2, S3) in x- und y-Koordinaten und der zu berechnenden Position (A) in x- und y-Koordinaten die Beschleunigung in vertikaler Richtung (z) an der Position (A) bestimmt wird.

3. Verfahren nach Anspruch 2, **dadurch gekennzeichnet, dass** Beschleunigungen an den Sensorpositionen auf Aktorpositionen transformiert werden.

4. Verfahren nach einem der vorhergehenden Ansprüche, **dadurch gekennzeichnet, dass** die Bewegungsgrößen durch Sensorgrößen oder durch aus diesen Messgrößen berechnete Signale gebildet werden.

5. Verfahren nach einem der vorhergehenden Ansprüche, **dadurch gekennzeichnet, dass** die "virtuellen" Messgrößen an den Aktorangriffspunkten als Eingangsgrößen für eine nachfolgende Regelung dienen.

6. Verfahren nach einem der vorhergehenden Ansprüche, **dadurch gekennzeichnet, dass** die Berechnung der virtuellen Sensorbewegungen "online" in einem Steuergerät durchgeführt werden.

7. Verfahren nach einem der vorhergehenden Ansprüche, **dadurch gekennzeichnet, dass** statt einer Beschleunigung auch ein Weg, eine Geschwindigkeit oder ein Ruck oder ähnliches verwendet werden.

8. Verfahren nach einem der vorhergehenden Ansprüche, **dadurch gekennzeichnet, dass** statt einer Messrichtung entlang der z-Achse auch Messrichtungen entlang der x- oder der y-Achse oder einer beliebig anderen Achsrichtung gewählt werden.

9. Verfahren nach einem der vorhergehenden Ansprüche, **dadurch gekennzeichnet, dass** mehr als drei Bewegungsgrößen als Eingangsgröße Verwendung finden und diese zusätzlichen Größen weitere Freiheitsgrade wie beispielsweise eine Torsion definieren.

10. Verfahren nach einem der vorhergehenden Ansprüche, **dadurch gekennzeichnet, dass** mehr als drei Bewegungsgrößen als Eingangsgröße Verwendung finden und die Ebenengleichung über ein "least-squares"-Verfahren ermittelt wird.

11. Verfahren nach einem der vorhergehenden Ansprüche, **dadurch gekennzeichnet, dass** die Transformation für die Ermittlung von "virtuellen" Relativbewegungen Verwendung findet, insbesondere für Bewegungen zwischen zwei Ebenen indem die Differenz der Bewegungen an definierten Punkten der Ebenen ermittelt wird.

12. Verfahren nach einem der vorhergehenden Ansprüche, **dadurch gekennzeichnet, dass** die Transformation näherungsweise für die Ermittlung von "virtuellen" Relativbewegungen, insbesondere Bewegungen zwischen einem Aufbau und einem oder mehreren Rädern beziehungsweise näherungsweise einer Radebene verwendet wird.

13. Verfahren nach Anspruch 11, **dadurch gekennzeichnet, dass** bei der Berechnung von "virtuellen" Relativbewegungen, der Aufbauanteil über die Ebenen-Transformation ermittelt wird und der Radanteil entweder mit einem zeitlichen Verzug von dem vorausfahrenden Rad übernommen wird oder über eine Radebenengleichung ermittelt wird oder von der anderen Achsseite übernommen wird.

14. System zur Beeinflussung der Bewegung eines in seinen Bewegungsabläufen steuerbaren oder regelbaren Fahrzeugaufbaus eines Kraftfahrzeuges, mit Sensoren, welche die Bewegung des Fahrzeugaufbaus erfassen, mit steuerbaren oder regelbaren Aktuatoren, insbesondere semi-aktiven oder aktiven Dämpfern, die zwischen dem Fahrzeugaufbau und den Fahrzeugrädern angeordnet sind, mit einem Dämpferregler, mittels dem die Sensorsignale verarbeitet werden und wenigstens ein Ansteuersignal für die Aktuatoren bereitgestellt wird, **dadurch gekennzeichnet, dass** der Dämpferregler beziehungsweise ein Steuergerät ein Modul umfasst, mittels dem aus bekannten Sensorsignalen an wenigstens drei Punkten des Fahrzeugsaufbaus die Bewegung des Fahrzeugaufbaus an wenigstens einem weiteren wählbaren Punkt des Fahrzeugaufbaus berechenbar ist, dessen x- und y-Lagekoordinaten bekannt sind, und der weitere Punkt die Position eines Fahrersitzes ist.

15. Fahrzeug, insbesondere Kraftfahrzeug, mit einem System zur Beeinflussung der Bewegung eines in seinen Bewegungsabläufen steuerbaren oder regelbaren Fahrzeugaufbaus nach Anspruch 14.

**Claims**

1. Method for generating signals for influencing the movement of a vehicle body, whose movement sequences can be open-loop or closed-loop controlled, of a motor vehicle, wherein the movement of the vehicle body is determined by sensor, the sensor signals corresponding to the determined sensor values are fed to a shock absorber controller, and the shock absorber controller supplies at least one control signal for actuating actuators, in particular semi-active or active shock absorbers, by means of which the movement of the vehicle body can be influenced, **characterized in that** the movement of the vehicle body at at least three points on the vehicle body is measured and the movement of the vehicle body at at least one further point is computed from the measured at least three measurement signals, the x and y position coordinates of said further point being known and the further point being the position of a driver's seat.

2. Method according to Claim 1, **characterized in that** three body accelerations are determined using vertical measured variables (z axis), and knowledge of the sensor positions (S1, S2, S3) in x and y coordinates and of the position (A) to be computed in x and y coordinates is used to ascertain the acceleration in a vertical direction (z) at the position (A).

3. Method according to Claim 2, **characterized in that** accelerations at the sensor positions are transformed to actuator positions.

4. Method according to one of the preceding claims, **characterized in that** the movement variables are formed by sensor variables or by signals computed from these measured variables.

5. Method according to one of the preceding claims, **characterized in that** the "virtual" measured variables at the actuator engagement points are used as input variables for subsequent closed-loop control.

6. Method according to one of the preceding claims, **characterized in that** the computation of the virtual sensor movements is performed "online" in a control unit.

7. Method according to one of the preceding claims, **characterized in that** a distance, a speed or a jerk or the like is also used instead of an acceleration.

8. Method according to one of the preceding claims, **characterized in that** measurement directions along the x or y axis or any other axial direction are also chosen instead of a measurement direction along the z axis.

9. Method according to one of the preceding claims, **characterized in that** more than three movement variables are used as an input variable and these additional variables define further degrees of freedom, such as a torsion, for example.

10. Method according to one of the preceding claims, **characterized in that** more than three movement variables are used as an input variable and the plane equation is determined using a "least-squares" method.

11. Method according to one of the preceding claims, **characterized in that** the transformation is used for determining "virtual" relative movements, in particular for movements between two planes, by virtue of the difference between the movements at defined points on the planes being determined.

12. Method according to one of the preceding claims, **characterized in that** the transformation is used approximately for determining "virtual" relative movements, in particular movements between a body and one or more wheels or approximately a wheel plane.

13. Method according to Claim 11, **characterized in that** the computation of "virtual" relative movements results in the body component being determined by means of the plane transformation and the wheel component either being accepted with a time delay from the wheel running ahead or being determined by means of a wheel plane equation or being accepted from the other axle side.

14. System for influencing the movement of a vehicle body, whose movement sequences can be open-loop or closed-loop controlled, of a motor vehicle, with sensors which detect the movement of the vehicle body, with open-loop or closed-loop controllable actuators, in particular semi-active or active shock absorbers, which are arranged between the vehicle body and the vehicle wheels, with a shock absorber controller by means of which the sensor signals are processed and at least one actuation signal is made available for the actuators, **characterized in that** the shock absorber controller or a control unit comprises a module by means of which the movement of the vehicle body at at least one further selectable point on the vehicle body is computable from known sensor signals at at least three points on the vehicle body, the x and y position coordinates of said further point being known and the further point being the position of a driver's seat.

15. Vehicle, in particular motor vehicle, having a system for influencing the movement of a vehicle body whose movement sequences can be open-loop or closed-loop controlled according to Claim 14.

**Revendications**

1. Procédé de génération de signaux destinés à influencer le mouvement d'une carrosserie de véhicule, dont le déroulement des mouvements peut être commandé ou régulé, d'un véhicule automobile, le mouvement de la carrosserie de véhicule étant déterminé, les signaux de capteur correspondant aux valeurs de capteur de détermination étant acheminés à un régulateur d'amortissement et le régulateur d'amortissement délivrant au moins un signal de commande destiné à commander des actionneurs, notamment des amortisseurs actifs ou semi-actifs, au moyen desquels le mouvement de la carrosserie de véhicule peut être influencée, **caractérisé en ce que** le mouvement de la carrosserie de véhicule est mesuré en au moins trois points de la carrosserie de véhicule et, à partir des au moins trois signaux de mesure mesurés, le mouvement de la carrosserie de véhicule est calculé en au moins un point supplémentaire dont les coordonnées de position X et Y sont connues, et le point supplémentaire est la position d'un siège de conducteur.

2. Procédé selon la revendication 1, **caractérisé en ce que** trois accélérations de carrosserie ayant des grandeurs de mesure verticales (axe Z) sont déterminées et l'accélération dans la direction verticale (Z) à la position (A) est déterminée en connaissant les positions des capteurs (S1, S2, S3) dans les coordonnées X et Y et la position (A) à calculer dans les coordonnées X et Y.

3. Procédé selon la revendication 2, **caractérisé en ce que** les accélérations au niveau des positions des capteurs sont transformées sur les positions d'actionneur.

4. Procédé selon l'une des revendications précédentes, **caractérisé en ce que** les grandeurs de mouvement sont formées par les grandeurs de capteur ou par des signaux calculés à partir de ces grandeurs de mesure.

5. Procédé selon l'une des revendications précédentes, **caractérisé en ce que** les grandeurs de mesure « virtuelles » au niveau des points d'application des actionneurs servent de grandeurs d'entrée pour une régulation qui suit.

6. Procédé selon l'une des revendications précédentes, **caractérisé en ce que** le calcul des mouvements de capteur virtuels est effectué « en ligne » dans un contrôleur.

7. Procédé selon l'une des revendications précédentes, **caractérisé en ce qu'**une course, une vitesse ou une secousse ou similaire sont également utilisées à la place d'une accélération.

8. Procédé selon l'une des revendications précédentes, **caractérisé en ce que** des directions de mesure le long de l'axe X ou Y ou une autre direction d'axe quelconque sont choisies à la place d'une direction de mesure le long de l'axe Z.

9. Procédé selon l'une des revendications précédentes, **caractérisé en ce que** plus de trois grandeurs de mouvement sont utilisées comme grandeurs d'entrée et ces grandeurs supplémentaires définissent des degrés de liberté supplémentaires tels qu'une torsion, par exemple.

**10.** Procédé selon l'une des revendications précédentes, **caractérisé en ce que** plus de trois grandeurs de mouvement sont utilisées comme grandeurs d'entrée et l'équation d'égalisation est déterminée par le biais d'un procédé des moindres carrés.

**11.** Procédé selon l'une des revendications précédentes, **caractérisé en ce que** la transformation est utilisée pour la détermination de mouvements relatifs « virtuels », notamment pour des mouvements entre deux plans **en ce que** la différence des mouvements est déterminée en des points définis des plans.

**12.** Procédé selon l'une des revendications précédentes, **caractérisé en ce que** la transformation est utilisée approximativement pour la détermination de mouvements relatifs « virtuels », notamment des mouvements entre une carrosserie et une ou plusieurs roues ou approximativement un plan de roues.

**13.** Procédé selon la revendication 11, **caractérisé en ce que** lors du calcul de mouvements relatifs « virtuels », la part de carrosserie est déterminée par le biais de la transformation des plans et la part de roues est reprise sous avec un retard dans le temps par rapport à la roue qui précède, soit déterminée par le biais d'une équation d'égalisation de roue ou reprise de l'autre côté de l'essieu.

**14.** Système pour influencer le mouvement d'une carrosserie de véhicule, dont le déroulement des mouvements peut être commandé ou régulé, d'un véhicule automobile, comprenant des capteurs qui détectent le mouvement de la carrosserie de véhicule, comprenant des actionneurs commandables ou régulables, notamment des amortisseurs actifs ou semi-actifs, qui sont disposés entre la carrosserie de véhicule et les roues de véhicule, comprenant un régulateur d'amortisseur au moyen duquel les signaux de capteur sont traités et au moins un signal de commande pour les actionneurs est délivré, **caractérisé en ce que** le régulateur d'amortisseur ou un contrôleur comprend un module au moyen duquel, à partir de signaux de capteur connus en au moins trois points de la carrosserie de véhicule, le mouvement de la carrosserie de véhicule peut être calculé en au moins un point supplémentaire sélectionnable dont les coordonnées de position X et Y sont connues, et le point supplémentaire est la position d'un siège de conducteur.

**15.** Véhicule, notamment véhicule automobile, comprenant un système pour influencer le mouvement d'une carrosserie de véhicule dont le déroulement des mouvements peut être commandé ou régulé selon la revendication 14.

FIG. 1

FIG. 2

FIG. 3

FIG.4

FIG.5

FIG.6

**EP 2 052 888 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 3918735 A1
- DE 19600724 C2

- EP 1785290 B1